# EUROPEAN PATENT APPLICATION

(11) **EP 4 597 170 A1**
(43) Date of publication of application: **06.08.2025**
(21) Application number: 25154215.5
(22) Date of filing: 27.01.2025
(51) Int. Cl.: G01S 19/29, G01S 19/30, G01S 19/36

(54) **TRACKING PERFORMANCE IMPROVEMENT BY COMBINING COMPONENTS OF A GLOBAL NAVIGATION SATELLITE SYSTEM SIGNAL**

(30) Priority: 30.01.2024 US 202463626861 P; 30.04.2024 US 202418651285
(71) Applicant: Avago Technologies International Sales Pte. Limited, Singapore 768923 (SG)
(72) Inventor: Madhani, Premal Harish, Irvine, 92618 (US); Nee, Chi, Irvine, 92618 (US); Abraham, Charles Raymond, Irvine, 92618 (US)
(74) Representative: Dilg, Haeusler, Schindelmann Patentanwaltsgesellschaft mbH

(57) **Abstract**

Technical solutions improve GNSS receiver performance by combining pilot and data components of the GNSS signal to enhance the accuracy of a DLL, PLL or FLL of the receiver (120). A receiver (120) receives a GNSS signal, removes a carrier component and provides in-phase and quadrature data and pilot signals. Data circuits (240) can process the in-phase and quadrature data signals for data early and date late offsets and pilot circuits (242) can process the in-phase and quadrature pilot signals for pilot early and pilot late offsets. The data early and data late signals can be combined to provide a data error difference and pilot early and pilot late signals can be combined to provide a pilot error difference. A summing circuit (216) can combine pilot and data error differences to provide a delay lock loop, DLL, error signal.

## Description

### CROSS-REFERENCE TO RELATED PATENT APPLICATIONS

This application claims the benefit of and priority to U.S. Provisional Application 63/626,861, filed 01/30/2024, incorporated herein by reference in its entirety.

### TECHNICAL FIELD

The present disclosure generally relates to signal processing of global navigation satellite system (GNSS) transmissions.

### BACKGROUND

Global navigation satellite system (GNSS) can include satellites in orbit transmitting signals to GNSS receivers on the ground. These signals can include carrier waves, navigation data and codes that can be used for positioning and navigation. The receivers can include circuitry for processing the incoming signals to make variety of determinations, such as determinations of receiver's location, velocity and time.

### SUMMARY

The technical solutions of the present disclosure are directed to enhancing the performance of GNSS (Global Navigation Satellite System) receivers by combining multiple components of the GNSS signal to improve the accuracy of the operations of any of the delay lock loop (DLL), phase lock loop (PLL) or frequency lock loop (FLL). In GNSS technology, the signals received from satellites can face challenges due to low signal-to-noise ratio (SNR) and multipath interference, which can lead to degraded tracking accuracy and reduced navigation precision. To overcome these challenges, the technical solutions provide improved receiver DLL and PLL circuitry that combines the carrier and code phases of the incoming signals to mitigate signal distortions, reduce the errors in DLL, PLL or FLL and improve receiver's tracking sensitivity. By taking advantage of the redundant information from the data and pilot signal components, the technical solutions improve the signal SNR, improving the ranging and positioning accuracy and robustness across diverse operating environments.

In some aspects, the technical solutions are directed to a device. The device can include a receiver configured to receive an input signal comprising a carrier component and a code component. The code component can be or include a data component and a pilot component. The device can include a carrier numerically controlled oscillator (NCO) coupled to the receiver and configured to remove the carrier component from the input signal. The carrier NCO can be configured to output an in phase signal and a quadrature signal for each of the data component and the pilot component. The device can include one or more data circuits configured to receive the in-phase signal and the quadrature signal for the data component. The device can include one or more pilot circuits configured to receive the in phase signal and the quadrature code signal for the pilot component. The device can include a summing circuit coupled to each of the one or more data circuits and the one or more pilot circuits. The summing circuit can be configured to sum a first error difference signal corresponding to the one or more data circuits and a second error difference corresponding to the one or more pilot circuits to provide a delay lock loop (DLL) error signal.

The device can include the input signal corresponding to a signal of a Global Navigation Satellite System (GNSS). The DLL error signal can be used to determine a distance between the device and a satellite of a Global Navigation Satellite System.

The one or more data circuits can include a first integrator of a first data circuit of the one or more data circuits. The first integrator can be configured to identify a first plurality of samples of the in phase signal of the data component and provide a first in phase combined output that combines the first plurality of samples over a sample time period. The first in-phase can be combined output offset according to a first time offset. The first data circuit can include a second integrator to identify a second plurality of samples of the quadrature data signal of the data component and provide a first quadrature combined output that combines the second plurality of samples over the sample time period.

The first data circuit can include a first squaring circuit that squares the first in phase combined output to produce a squared first in-phase combined output and a second squaring circuit that squares the first quadrature combined output to produce a squared first quadrature combined output. The first data circuit can include a first combiner to combine the squared first in phase combined output of the first data circuit with the squared first quadrature combined output of the first data circuit to produce a first output of the first data circuit. The squaring circuit can include a magnitude determination circuit or a circuit applying a non-linear operation on the signal to determine the power of the signal.

The device can include a second data circuit of the one or more data circuits. The second data circuit can include a second combiner of the second data circuit to combine a squared in-phase combined output of the second data circuit with a squared quadrature combined output of the second data circuit to produce a second output of the second data circuit. The second output of the second data circuit offset according to a second time offset can be different than the first time offset. The first output of the first data circuit and the second output of the second data circuit can be combined to produce the first error difference signal.

The one or more pilot circuits can include a first integrator of a first pilot circuit of the one or more pilot circuits. The first integrator can be configured to identify a first plurality of samples of the in phase signal of the pilot component and provide a second in-phase combined output that combines the third plurality of samples over a sample time period. The first in-phase combined output can be offset according to a first time offset.

The first pilot circuit can include a second integrator to identify a second plurality of samples of the quadrature pilot signal of the pilot component and provide a second quadrature combined output that combines the second plurality of samples over the sample time period. The first pilot circuit can include a first squaring circuit of the first pilot circuit that squares the second in-phase combined output to produce a squared second in-phase combined output and a second squaring circuit of the first pilot circuit that squares the second quadrature combined output to produce a squared second quadrature combined output. The first pilot circuit can include a second combiner to combine the squared second in-phase combined output of the first pilot circuit with the squared second quadrature combined output of the first pilot circuit to produce an output of the first pilot circuit.

The device can include a second pilot circuit of the one or more pilot circuits. The second pilot circuit can include a second combiner of the second pilot circuit to combine a squared in-phase combined output of the second pilot circuit with a squared quadrature combined output of the second pilot circuit to produce a second output of the second pilot circuit. The second output of the second pilot circuit can be offset according to a second time offset different than the first time offset. The first output of the first pilot circuit and the second output of the second pilot circuit can be combined to produce the second error difference signal.

An aspect of the technical solutions can be directed to a circuitry. The circuitry can be a circuitry for a phase lock loop (PLL) or a frequency lock loop (FLL). The circuitry can include a track pilot memory configured to receive and store samples of a pilot signal of a global navigation satellite system (GNSS) signal and a track data memory configured to receive and store samples of a data signal of the GNSS signal. The circuitry can include a lock loop circuit for at least one of a phase or a frequency of the GNSS signal. The lock loop circuit can include a combiner configured to combine samples of the pilot signal with samples of the data signal according to a phase of the pilot signal and a phase of the data signal. The lock loop circuit can include an accumulator configured to receive combined samples from the combiner and provide a signal of samples accumulated over a time period. The lock loop circuit can include a discriminator coupled to the accumulator and configured to use the signal of samples to determine an error signal over the time period. A lock loop circuit can include a loop filter configured to apply a filter to the error signal to provide a filtered output signal used to determine of a level at which a phase lock loop is locked.

The filtered output signal can be used to provide one or more signals to track at least one of a carrier frequency of a signal transmitted from a satellite of a Global Navigation Satellite System (GNSS) or a phase of the signal transmitted from the satellite of the GNSS. The circuitry can include a numerically controlled oscillator (NCO) circuit configured to adjust a frequency of an oscillator of the NCO circuit to minimize a phase difference between the filtered output signal and a signal generated by the oscillator of the NCO circuit. The circuitry can include a look-up circuit having a look-up table (LUT) to map an output from the NCO circuit to a LUT value. The look-up circuit can be configured to produce a LUT signal based on the LUT value. The circuitry can be configured to use the LUT signal as an input to the combiner. The circuitry can be configured to store at least one of the LUT value or the LUT signal into at least one of the track pilot memory or the track data memory.

An aspect of the technical solutions is directed to a system. The system can include a track pilot memory configured to receive and store samples of a pilot signal of a global navigation satellite system (GNSS) signal. The system can include a track data memory configured to receive and store samples of a data signal of the GNSS signal. The system can include a lock loop circuit for at least one of a phase or a frequency of the GNSS signal. The lock loop circuit can include a combiner to combine the samples of the pilot signal with the samples of the data signal according to a phase of the pilot signal and a phase of the data signal to produce combined samples. The lock loop circuit can include an accumulator to receive the combined samples from the combiner and accumulate a signal of time period of samples. The lock loop circuit can include a discriminator to use the signal of time period of samples to provide an error signal over a time period. The lock loop circuit can include a loop filter to filter the error signal to use the error signal to provide a filtered error signal. The lock loop circuit can include a numerically controlled oscillator (NCO) to use the filtered error signal to provide a signal with an adjusted frequency. The lock loop circuit can include a look up table to generate the signal with the adjusted frequency to control a code generator rate of a delay lock loop. The delay lock loop can include a first delay lock loop for the data signal and a second delay lock loop for the pilot signal. The first delay lock loop and the second delay lock loop can be configured to provide for the track pilot memory the samples of the pilot signal and for the track data memory the samples of the data signal.

### BRIEF DESCRIPTION OF THE DRAWINGS

These and other aspects and features of the present embodiments will become apparent to those ordinarily skilled in the art upon review of the following description of specific embodiments in conjunction with the accompanying figures.
FIG. 1 is an example block diagram of a system for improving GNSS receiver performance by combining pilot and data GNSS signal components to enhance DLL and PLL accuracy.
FIG. 2 is an example of a DLL circuitry that utilizes pilot and data components of the GNSS signal to improve the receiver performance.
FIG. 3 is an example of a PLL or FLL circuitry of a phase lock loop circuitry that utilizes pilot and data components of the GNSS signal to improve the receiver performance.
FIG. 4 is an example of a flow diagram of a method for implementing a DLL using pilot and data components of the GNSS signal to improve the receiver performance.
FIG. 5 is an example flow diagram of a method for implementing a PLL or FLL using pilot and data components of the GNSS signal to improve the receiver performance.

### DETAILED DESCRIPTION

The present embodiments shall now be described in detail with reference to the drawings, which are provided as illustrative examples of the embodiments so as to enable those skilled in the art to practice the embodiments and alternatives apparent to those skilled in the art. Figures and examples below are not meant to limit the scope of the present embodiments to a single embodiment, but other embodiments are possible by way of interchange of some or all of the described or illustrated elements, or those apparent to a person of ordinary skill in the art. Certain elements of the present embodiments can be partially or fully implemented using known components, only those portions of such known components that are necessary for an understanding of the present embodiments shall be described, and detailed descriptions of other portions of such known components will be omitted so as not to obscure the present embodiments. Embodiments described in their illustrated contexts should not be limited thereto. For example, embodiments described as being implemented in software should not be limited to such implementation alone, but they can include embodiments implemented in hardware, or combinations of software and hardware, and vice-versa, as will be apparent to those skilled in the art, unless otherwise specified herein. In the present specification, an embodiment showing a singular component should not be considered limiting; rather, the present disclosure is intended to encompass other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present embodiments encompass present and future known equivalents to the known components referred to herein by way of illustration.

The disclosed technical solutions aim to improve GNSS receiver performance by combining pilot and data components of the GNSS signal to enhance the accuracy of any one or more of circuits for DLL, PLL or FLL in a GNSS receiver device or a system. Signals received from GNSS satellites can suffer from low signal to noise (SNR) ratios for a variety of reasons, such as atmospheric conditions, interferences, or signal blockages caused by buildings or terrain features. This can affect the reliability of the GNSS signal received at GNSS receivers, which can in turn result in noisy PLL, FLL and DLL signals, compromising the accuracy of the receiver's tracking and navigation precision.

The technical solutions provide improved receiver DLL, PLL or FLL circuitry to reduce signal distortions and improve SNR by combining the carrier and code phases of the incoming signals. Utilizing coherent combining techniques and signal sampling, the technical solutions can take advantage of the redundant information in the data and pilot signal components to improve the SNR of the PLL, FLL or DLL signals, providing improvements of about 3dB in terms of the SNR improvement. Using the improved DLL and PLL or FLL circuitry, the technical solutions can enhance tracking sensitivity, resulting in superior ranging and positioning accuracy across diverse operating environments.

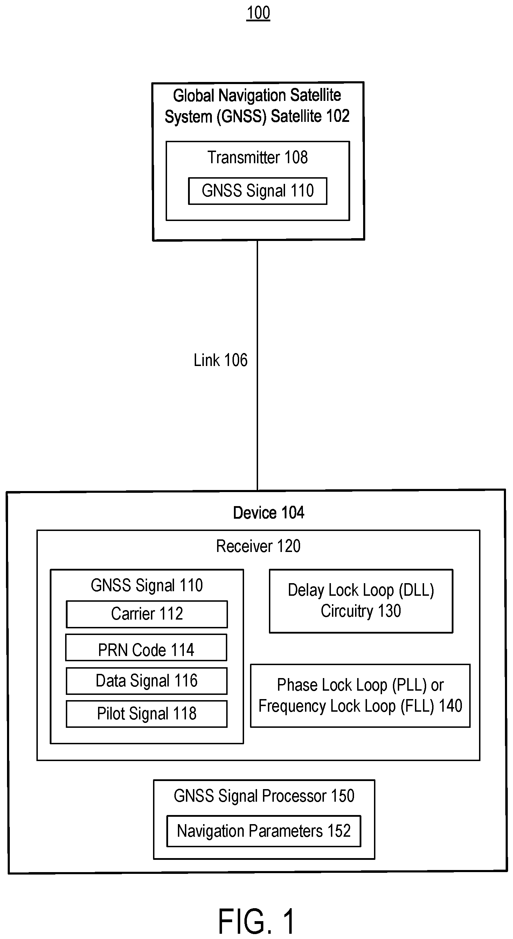

FIG. 1 is an example block diagram of a system 100 for improving GNSS receiver performance by combining pilot and data components of the GNSS signal to improve the accuracy of the delay lock loop (DLL) and the phase or frequency lock loop (PLL or FLL) of the receiver. System 100 can include a global navigation satellite system (GNSS) satellite 102 communicating with a device 104 via a link 106. GNSS satellite 102, also referred to as the satellite 102, can include one or more transmitters 108 and one or more GNSS signals 110 being transmitted to various devices 104. Each device 104 can include one or more receivers 120 for receiving the GNSS signals 110 and one or more GNSS signal processors 150 for generating various navigation parameters 152 (e.g., range and location information). Receiver 120 can process the incoming GNSS signals 110, also referred to as the signal 110. Each signal 110 can include one or more carriers 112, pseudorandom noise (PRN) codes 114, data signals 116 and a pilot signals 118. Receiver 120 can include one or more delay lock loop (DLL) circuits 130, or one or more circuits 140 which can include one or more phase lock loops (PLLs) or frequency lock loops (FLLs), any of which can be used individually or in combination with each other to provide more accurate determinations of navigation parameters 152 by the GNSS signal processor 150.

GNSS, or Global Navigation Satellite System, can include any constellation of satellites 102 providing worldwide positioning, navigation, and timing services to devices 104 on Earth. A GNSS satellite 102, also referred to as a satellite 102, can include any combination of hardware and software for generating and transmitting GNSS signals to devices 104. Satellite 102 can be launched and exist in an orbit above the Earth and communicate or broadcast GNSS transmissions, such as GNSS signals 110, via links 106 to various devices 104 on the ground. Satellite can include one or more transmitters 108 for emitting GNSS signals 110 having carriers 112 and various types of PRN codes 114, having any number of data signals 116 and pilot signals 118. For example, a satellite 102 can transmit signals to a receiver 120 of a device (e.g., a smartphone) allowing the device 104 to precisely determine its navigation parameters 152, such as device's location on a navigation application executed on the device. The satellite 102 can broadcast data signals 116 and pilot signals 118 via GNSS signals 110 for any number of devices 104 on the ground.

Transmitter 108 can include any combination of hardware and software for transmitting radio frequency (RF) transmissions, such as GNSS signals 110, from a satellite 102 towards devices 104. The transmitter 108 can include various circuitry for generating signals 110. For instance, transmitter 108 can include a signal generator for generating a baseband signal carrying navigation data and timing information (e.g., data signal 116). Transmitter 108 can include a modulator for modulating baseband signals with carrier frequencies (e.g., carrier 112), using various techniques, such as a phase shift keying (PSK) or binary offset carrier (BOC) to encode the navigation data into the carrier 112. Transmitter 108 can include amplifier for amplifying the signal and increasing the signal power or strength. Transmitter 108 can include an antenna for transmitting the signal via link 106 to the devices 104 on the ground.

GNSS signal 110, also referred to as a signal 110, can include any signal, data or information transmitted by a satellite 102 for global positioning and navigation purposes. The signal 110 can include any electromagnetic waves or RF transmissions emitted by the satellite 102 and received by receivers 120 of device 104. Signal 110 can include data, indications or information corresponding to, or used by, receiver 120, including circuitry 140 (e.g., PLL or DLL circuit) or DLL circuitry 130. Signal 110 can include information or data, such as signal features indicative of phase information or frequency information. Signal 110 can be encoded in various ways (e.g., PSK or BOC) and can include features or components, such as carrier frequencies 112 and code 114. Signal 110 can include PRN code 114, data signal 116 and one or more pilot signals 118, which can be utilized by PLL or FLL and DLL circuitries in various ways. For instance, PRN code 114 can be configured to include data 116 and pilot 118. For instance, signal 110 can include the code 114, data 116 and pilot 118, each being encoded with the carrier frequency 112. For example, signal 110 can include a baseband signal that includes data signal 116 and pilot signal 118 components, which then can be modulated onto a carrier frequency 112 Signal 110 can include carriers 112 that can provide frequency reference points and PRN codes 114, with data signals 116 and pilot signals 118 that can allow for code phase tracking and signal demodulation by the receivers 120.

Carrier 112, also referred to as a carrier signal 112, can include any continuous waveform at a specific frequency for modulating data or information for wireless transmission. Carrier 112 can include a frequency combined with, or embedded within, a signal 110. Carrier 112 can be used by the receiver 120 as a reference frequency transmitted by the GNSS satellite 102 and can provide a basis for determining the phase and frequency of the signal. For example, carriers 112 can allow a receiver 120 to establish an accurate timing information, allowing for synchronization of receiver's internal clock with the timing of the transmitted signal, allowing for more accurate determination of distances between the receiver and one or more satellites 102.

Pseudorandom noise code (PRN) 114, also referred to as the code 114, can include any sequence of binary code used to modulate the carrier signal in satellite navigation systems for accurate timing and signal identification. The code 114 can include a pattern of binary data that is unique to a satellite signal and that is being periodically repeated. The code 114 can include one or more data signals 116 and pilot signals 118, having pseudo-random sequences used for signal modulation and demodulation and allowing for accurate tracking and decoding by receivers 120. In some configurations, code 114 can be a component of the signal 110 that is independent from data 116 and pilot 118. In some configurations, code 114 can include data 116 and pilot 118 components. For example, data signals 116 can include data for navigation parameters 152, while pilot signals 118 can include information, such as reference points, for signal acquisition and code phase determination.

Data signal 116, also referred to as data 116, can include any portion of PRN code 114 that encodes or signifies information for determining navigation parameters 152, such as satellite ephemeris, time or other navigation data for determining positioning and satellite tracking. Data 116 can include navigation information transmitted by the GNSS satellite 102 that can be used for clock corrections or other positioning parameters for determining navigation parameters 152. Data signal 116 can include real-time updates on satellite position and system status. Data signal 116 along with the pilot signal 118 can be encoded within a baseband signal of the signal 110.

Pilot signal 118, also referred to as pilot 118, can include portion of PRN code 114 that does not carry data bits (e.g., data 116), but includes information or features that can facilitate signal tracking, time synchronization, and accurate phase or carrier frequency detection. Pilot signal 118 can include, or function as, a reference signals for signal acquisition and tracking determinations. Pilot 118 can facilitate receiver 120 in synchronizing with transmitted signals and determining code phase alignment for accurate positioning or reduction of error in PLL or FLL and DLL circuits. For example, pilot 118 can be used to mitigate signal distortions and improve tracking sensitivity, thereby improving the overall performance of the receiver 120.

Link 106 can include any communication path for transmitting signals 110 between the satellites 102 and the receiver devices 120. Link 106 can include a wireless path for transmitting RF signals between the antenna of transmitter 108 and an antenna or a transceiver of the receiver 120. Link 106 can include or support established communication between the satellite 102 and devices 104 on the ground, allowing for continuous communication and real-time updates on satellite position and navigation data.

Device 104 can include any combination of hardware and software that can include or provide a receiver 120 for receiving and utilizing GNSS signal 110. Device 104 can include electronic systems capable of receiving and processing signals 110, including any devices including and utilizing DLL circuitry 130 and PLL or FLL circuitry 140 for navigation and positioning purposes. Device 104 can include one or more receivers 120. Receiver(s) 120 can include the circuitry for capturing and decoding transmitted signals 110 (e.g., antennas, transceivers, decodes, signal filters and switches and processors arranged in a wireless communication chain). Device 104 can include GNSS signal processors 150 to use information gathered from data 116 to generate navigation parameters 152. For instance, device 104 can be a handheld global positioning system (GPS) device that includes a receiver 120 and GNSS signal processors 150 for location determination and navigation.

Receiver 120 can include any combination of hardware and software for receiving and processing signal 110. Receiver 120 can be a standalone device or can be included in a device 104 or a larger system. Receiver 120 can include circuitry configured to capture and process signals 110 received via antennas of the device 104 from satellites 102. Receiver 120 can include any arrangement of circuit components, such as antennas, amplifiers, filters, signal mixers, analog to digital converters (ADC), switches or multiplexers, any of which can be combined or arranged into RF signal communication processing chains for processing the signal 110. Receiver 120 can include a delay lock loop circuitry 130 and phase lock loop circuitry 140 utilizing various portions of data signal 116 and pilot signal 118 to improve signal reception and tracking accuracy.

Delay lock loop (DLL) circuitry 130, also referred to as the DLL 130, can include any circuitry for synchronizing a phase of an output signal with an input signal to recover information, such as timing of modulated signals. DLL circuitry 130 can include any combination of circuit components arranged to synchronize the code phase of an output signal with the code phase of an input signal to recover timing information from signal 110. DLL 130 can improve signal acquisition and tracking accuracy by synchronizing with the incoming PRN codes 114. For instance, a local replica of the PRN codes 114 can be generated and used to compare with the PRN code 114 of the incoming signal and adjust timing to minimize phase difference. DLL circuitry 130 can include various circuits, such as code NCOs 206, integrators 208, squaring circuits 210 and combiners 212, or any other circuit components, depending on the design that can facilitate processing of the signals and precise code phase determination. DLL circuit 130 can include feedback mechanisms, such as feedback from a PLL/FLL circuitry 140, to adjust or improve its operation.

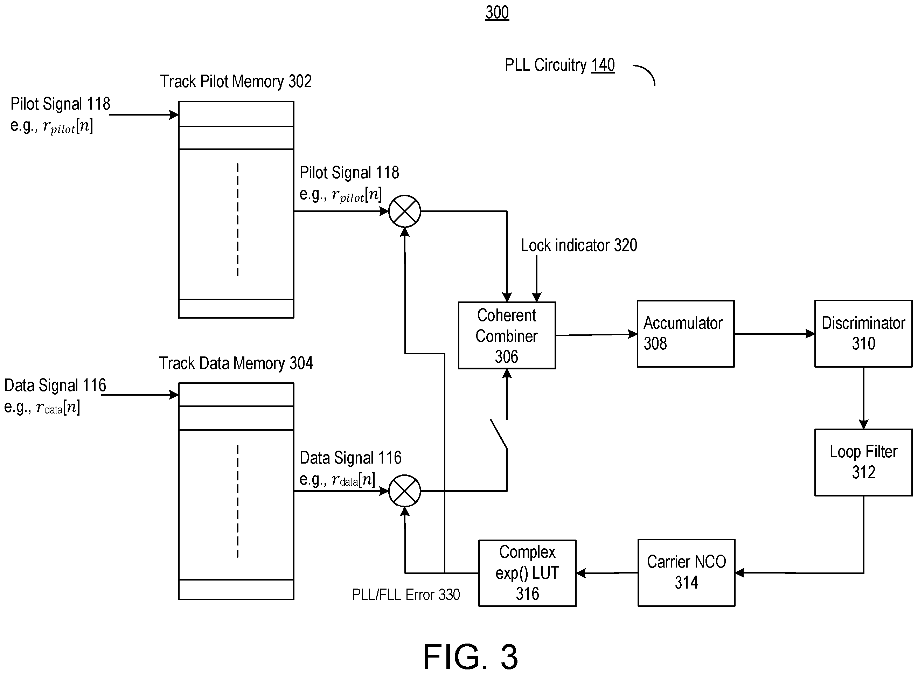

Phase or frequency lock loop (PLL or FLL) circuitry 140, also referred to as the PLL or FLL 140, can include any control circuit or a system that generates an output signal whose phase is related to the phase of an input signal. The PLL and FLL circuitry 140 can include the same or similar circuitry or design (e.g., as shown in FIG. 3), differing between each other, for example, in the type or design of a discriminator circuit. While a PLL 140 can be designed to synchronize the phase of an output signal with the phase of an input signal, maintaining a constant phase relationship between the two, an FLL 140 can be designed to synchronize the frequency of the output signal with the frequency of the input signal, to facilitate the output frequency tracking the changes in the input frequency.

The PLL or FLL 140 can include any configuration of circuit components integrated in the receiver 120 to facilitate phase and frequency coherence between the locally generated signals and the incoming signals 110, or its components. PLL or FLL circuitry 140 can utilize feedback mechanisms, such as feedback from a DLL 130, to adjust the local oscillator frequency and improve signal tracking and demodulation. For example, the phase or frequency lock loop circuitries 140 can compare the phase of the received signals with a reference signal, generating error signals that regulate the oscillator frequency for accurate signal processing.

GNSS signal processor 150 can include any combination of hardware and software, such as any digital signal processor, for determining, generating and processing navigation parameters 152. GNSS signal processor 150 can utilize information from the DLL 130 and PLL/FLL 140 to facilitate, improve or adjust its determinations. For instance, GNSS signal processor 150 can compute parameters, such as position, range, velocity or timing using outputs from DLL circuitry 130 and PLL/FLL circuitry 140. Processor 150 can be coupled with memory, such as random access memory (RAM), flash memory, solid state drive (SSD), hard disk drive (HDD) or any other type of memory for storing data. Processor 150 can be configured to access instructions, commands, data or configurations stored in the memory to implement functionalities of the technical solutions.

Navigation parameters 152 can include any parameters or values determined based on a GNSS signal 110. Navigation parameters 152 can include parameters such as position, velocity, and time, which can be computed using code phase measurements and carrier phase measurements. For example, navigation parameters 152 can be used to estimate user position and velocity by combining data from DLL circuitry 130 and PLL/FLL circuitry 140. Navigation parameters 152 can include any positioning information, such as latitude, longitude or altitude, any range information, such as distance from a reference point, such as a satellite 102, any satellite related information, such as number of satellite signals received, positions of satellite signals and various signal strength.

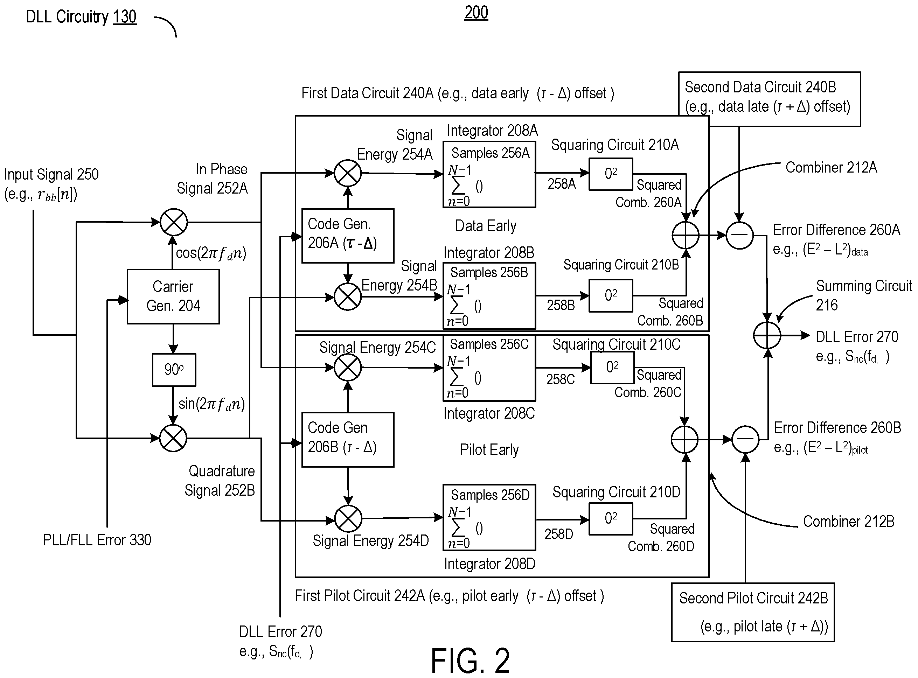

FIG. 2 illustrates an example architecture 200 of a delay lock loop (DLL) circuitry 130 that utilizes pilot and data components of the GNSS signal to improve the receiver performance. The DLL circuitry 130 of example architecture 200 can include an input signal 250 processed by a carrier generator 204, which can also be referred to as carrier gen 204. The carrier generator 204 can include a carrier numerically controlled oscillator (NCO) configured to process (e.g., remove) the carrier 112 from the incoming or input signal 250. Once the carrier generator 204 removes the carrier frequency 112, the remaining signal can be (e.g., or split into) an in-phase signal 252A and quadrature signal 252B components, where the quadrature signal 252B can be a 90 degree phase offset signal from the in-phase signal 252A. The in-phase signal 252A and the quadrature signal 252B can include the components or features of the input signal 250 without the carrier component and can each be fed as input signals into one or more data circuits 240 (e.g., first data circuit 240A and second data circuit 240B) and into one or more pilot circuits 242 (e.g., first pilot circuit 242 and second pilot circuit 242B).

At a high level, the first data circuit 240A can be configured to process a data signal component of the in-phase and quadrature signals 252A and 252B according to an early temporal offset (e.g., signal time shifted in a first time direction) using code generator 206A, integrators 208A and 208B, squaring circuits 210A and 210B and the combiner 212A. The output of this signal processing (e.g., the output from the combiner 212A) can be combined (e.g., added, subtracted or averaged) with a processing of the same data signal component by a second data circuit 240B that can be configured to process the same data components of the in-phase and quadrature signals 252A and 252B according to a late temporal offset (e.g., time shifted in a second time direction opposite of the first time direction). The second data circuit 240B can implement this processing using the same circuit components (e.g., 206, 208, 210 and 212 of the second data circuit 240B) configured in the same way as shown in first data circuit 240A, with a different time offset (e.g., data late offset) implemented in the code generator.

Likewise, at a high level, the first pilot circuit 242A can be configured to process a pilot signal component of the in-phase and quadrature signals 252A and 252B according to an early temporal offset (e.g., signal time shifted in a first time direction) using code generators 206B, integrators 208C and 208D, squaring circuits 210C and 210D and the combiner 212B. The output of this signal processing (e.g., the output from the combiner 212B) can be combined with a processing of the same pilot signal component by a second pilot circuit 242B that can be configured to process the same pilot components of the in-phase and quadrature signals 252A and 252B signals according to a late temporal offset (e.g., time shifted in a second time direction opposite of the first time direction). The second pilot circuit 242B can implement this processing using the same circuit components (e.g., 206, 208, 210 and 212 of the second pilot circuit 242B) configured in the same way as shown in first pilot circuit 242A, with a different time offset (e.g., pilot late offset) implemented in the code generator. Each of the first data circuit 240A, the second data circuit 240B paths, the first pilot circuit 242A and the second pilot circuit 242B can include individual processing paths for in-phase and quadrature portions of the signals.

For instance, a first copy of an in-phase signal 252A and a first quadrature signal 252B can be input into a first data early offset processing path of a first data circuit 240A to process data 116 portion of the input signal. For instance, a second copy of an in-phase signal 252A and a second quadrature signal 252B can be input into a second data early offset processing path of first pilot circuit 242A for processing a pilot 118 portion of the signal.

Within each of the first data circuit 240A and a first pilot circuit 242A, individual component paths (e.g., for processing data and any pilot components), a code generator 206, also referred to as code gen 206, can process the in-phase and quadrature signals 252A and 252B to remove the code portion of the signal and provide as output the signal energy 254. The signal energy 254 can include a codeless or a de-spread signal that can include, represent, or be indicative of the level of energy signal in the GNSS signal from which the carrier and code or pilot components are removed. For instance, in the first data circuit 240A for the data early part, in-phase signal 252A can be processed into a signal energy 254A and the quadrature signal 252B can be processed into a signal energy 254B. For instance, in the first pilot circuit 242A for the pilot early part, the in-phase signal 252A can be processed into a signal energy 254C and the quadrature signal 252B can be processed into a signal energy 254D.

Each of the processing paths in the first data circuit 240A and the first pilot circuit 242A, can include a pair of integrators 208 (e.g., 208A, 208B, 208C and 208D) for processing each of the in-phase and quadrature signals. The integrators 208 can receive the respective in-phase and quadrature signals as inputs and generate samples 256 of these signals. Samples 256 can include any number of samples of the in-phase and quadrature signal energies 254 (e.g., 254A-D) gathered over a predetermined time interval. By using samples 256 (e.g., samples 256A for integrator 208A, samples 256B for integrator 208B, samples 256C for integrator 208C and samples 256D for integrator 208D), these integrators 206 can increase the SNR of the processed signals, improving the signal strength and reducing the noise at this stage of signal processing. Code generators (e.g., 206A, 206B) can apply a negative time offset (e.g., data early) sampling data at time offsets (tau - delta), where tau can be the time of the code phase estimated and delta is an offset in time.

Each of the first data circuit 240A and the first pilot circuit 242A, within their in-phase and quadrature processing paths, can include a squaring circuit 210. The pair of squaring circuits 210A and 210B can correspond to the in-phase and quadrature paths of the first data circuit 240A and the pair of squaring circuits 210C and 210D can correspond to the in-phase and quadrature paths of the first pilot circuit 242A. A squaring circuit 210 can include a circuit for determining a magnitude of the circuit signal. Squaring circuit 210 include any circuit applying a non-linear operation on the signal to determine the power of the signal. Squaring circuits 210A-D can each process their respective data or pilot in-phase and quadrature paths, by receiving their respective outputs from the integrators 208 (e.g., from 208A-D) and processing these received signals to generate or provide squared combined signals 258 as their respective outputs. The squared combined signals 260A and 260B from the in-phase and quadrature paths of the DLL 240 early data component can be combined at combiner 212A to produce an output of the DLL 240 early component. Likewise, the squared combined signals 260C and 260D from the in-phase and quadrature paths of the DLL 240 early pilot component can be combined at combiner 210B to produce an output of the DLL 240 early pilot component.

The outputs of the respective first data circuit 240A and first pilot circuit 242A processing paths can each be provided as outputs for the respective second data circuit 240B and the second pilot circuit 242B. For instance, the output from the combiner 212A of the first data circuit 240A can be then combined with (e.g., added to or subtracted by) the output from a combiner 212C of the second data circuit 240B which can include the same characteristics, circuit components and design as the first data circuit 240A (e.g., a copy of the first data circuit 240A), except that the time offset is different in the second data circuit 242B (e.g., data late offset) than in the first data circuit 240A (e.g., data early offset). For instance, the output from the combiner 212B of the first pilot circuit 242A can be then combined with (e.g., added to or subtracted by) the output from a combiner 212D of the second pilot circuit 242B which can include the same characteristics, circuit components and design as the first pilot circuit 242A (e.g., a copy of the first pilot circuit 242A), except that the time offset is different in the second pilot circuit 242B (e.g., data late offset) than in the first pilot circuit 242A (e.g., data early offset).

For example, the outputs from each of the first data circuit 240A and the second data circuit 240B can be processed by their respective data/pilot late paths 212 that can apply a positive time offset components, subtracted from the early output and produce an error difference 260A signal for the first data circuit 240A and the second data circuit 240B and an error difference 260B signal for the first pilot circuit 242A and the second pilot circuit 242B. The error difference 260A signal and 260B signal can then be weighted and summed by the summing circuit 216 to generate or produce a DLL error 270 whose SNR is improved by about 3dB with respect to DLL circuitry with only a single signal component. For instance, the summing circuit 216 can apply weights or parameters for scaling the error differences 260A and 260B in order to minimize the DLL error 270. The DLL error 270 signal can then be used as input to the code gen 206A and code gen 206B to facilitate further reduction of the error and improved performance.

In the example 200, DLL 130 can include an input signal 250 (e.g., signal 110) input into a carrier generator 204 that can include a carrier numerically controlled oscillator (NCO) configured to remove the carrier signal 112. Signal 250 can include any portion or version of signal 110. For example, signal 250 can include a pre-processed version of the signal 110, a filtered signal 110 signal or a baseband signal from signal 110. For instance, signal 250 can include a signal 110 as received from the satellite 102, such as a signal 110 with a carrier 112 and the baseband component having data signal 116 and pilot signal 118 encoded into the signal 110.

The carrier and code generators 204 or 206 can include any circuit configured to generate an oscillating signal whose frequency and phase are controlled by digital numerical inputs. The carrier and code generators204 and 206 can include digital circuitry allowing for precise frequency synthesis and modulation in various applications such as communication systems and signal processing. The carrier and code generators 204 or 206 can include phase accumulators to accumulate digital phase increments and digital to analog converters (DACs) to convert the phase increments to analog signals. The carrier and code generators 204 or 206 can include filters to filter the output signals and feedback mechanism to feed back the outputs to phase accumulator to produce a continuous oscillating waveform with a frequency determined by the rate of the phase increments and clock frequency.

Carrier generator 204 can include, or be coupled with, a quadrature demodulator or quadrature mixer that can be used to split the incoming input signal 250 into an in-phase signal 252A and a quadrature signal 252B. The in-phase signal 252A can be aligned with a reference signal (e.g., in-phase), while the quadrature can be shifted by 90 degrees with respect to the reference (e.g., with respect to in-phase). Once split, the in-phase signal 252A and the quadrature 252B can be independently processed or combined by the circuitry to extract specific information or details from the signal. The carrier generator 204 can receive as its input signal a PLL or FLL error 330 signal that can be generated in FIG. 3 from the PLL or FLL circuitry 140.

For instance, the in-phase signal 252A and the quadrature signal 252B can be input into each of the in-phase and quadrature early data offset processing paths of the first data circuit 240A for processing the data component of the signal 110. For instance, the in-phase signal 252A and the quadrature signal 252B can be input into each of the in-phase and quadrature early pilot offset processing paths of the first pilot circuit 242 for processing the pilot components of the signal 110.

With respect to the data circuits 240 signal processing, each of the data circuits 240A and 240B can include a path circuitry (e.g., a combiner for code generator 206, integrator 208, squaring circuit 210 and combiner 212) for each of the in-phase signal 252A and quadrature signal 252B paths. For instance, each of the data circuits 240 can include code generators 206A or 206C (e.g., for the second data circuit 240B) that can process the in-phase signal 252A and the quadrature 252B to remove the code portions from these signals. For example, the code generator 206A can remove the data component from both the in-phase signal 252A and the quadrature signal 252B. Once the data component is removed, the in-phase path of the first data circuit 240A can operate on a remaining signal energy 254A, while the quadrature path of the first data circuit 240A can operate on a remaining signal energy 254B.

Signal energy 254A (e.g., of the in-phase path) can be input into an integrator 208A. Integrator 208A can include any circuitry that is configured to improve the signal strength and improve the signal-to-noise ratio (SNR) by sampling and integrating the input signal (e.g., in-phase or quadrature signal energy 254) over a time period to provide combined output signals. Integrator 206 can include, for example, operational amplifiers configured as integrators, digital signal processing circuits for digital integration, or dedicated analog-to-digital converters (ADCs) followed by digital accumulators for discrete-time integration.

For instance, once the code generator 206A removes the code (e.g., 116 or 118 components) from the in-phase signal, the remaining signal energy 254A can be directed to the integrator 208A for the in-phase data processing. For instance, once the code (e.g., 116 or 118 components) is removed from the quadrature signal, the remaining signal energy 254B can be directed to the integrator 208B for the quadrature data processing. The integrators 208A and 208B can receive their respective signal energies 254A or 254B and sample them to produce samples 256A and 256B. For instance, integrator 208A can sample signal energy 254A to produce samples 256A over a time period, such as 10, 20, 50, 100, 200, 500, or more than 1000 ms (e.g., 1 second) if data bits are known, else limited to bit duration of the data channel. The time period can be multiple seconds, such as 2, 4, 6, 10 or more than 10 seconds. Likewise, integrator 208B can sample signal energy 254B to produce samples 256B over the same or similar time periods (e.g., 10ms, 100ms, 500ms, or 5 or more seconds) if data bits are known, otherwise it can be limited to bit duration for the data channel.

Once integrators 208A and 208B generate samples 256 (e.g., samples 256A at integrator 208A and samples 256B at integrator 208B), the integrators 256 can integrate or combine the samples 256 to provide combined outputs. For instance, the integrator 208A can provide an in-phase combined output 258A and integrator 208B can provide a quadrature combined output 258B. These combined signals 258 can be integrated over a defined time period to strengthen the signal by accumulating energy from multiple samples, thereby enhancing its detectability and reducing the impact of noise.

Squaring circuits 210, such as squaring circuit 210A for in-phase path and squaring circuit 210B for quadrature path of the first data circuit 240A (e.g., early data component) can receive the combined integrated signals from the integrators 208 and square them to produce squared combined signals 260 as outputs. Squaring circuit 210 can be or include an optimal magnitude determination circuit or any circuit applying a non-linear operation on the signal to determine the power of the signal. Similarly, in the first pilot circuit 242A, a squaring circuit 210C for the in-phase path and the squaring circuit 210D for the quadrature path, can each receive their combined integrated signals (e.g., 258C and 258D) to provide squared combined signals 260C and 260D. Squaring circuits 210A-D can include any analog or digital circuit to square the input signal, such as an operational amplifier configured as a voltage follower that is followed by one or more nonlinear elements, such as diodes or transistors to produce squared signal outputs.

Combiners 212A and 212B can receive the squared combined signals 260 from their respective in-phase and quadrature paths and combine them into a single output of the respective first data circuit 240A and the first pilot circuit 242A. For instance, combiner 212A can receive the squared combined signals 260A and 260B and combine them into an output of the first data circuit 240A (e.g., early data offset for the data signal). For instance, combiner 212B can receive the squared combined signals 260C and 260D and combine them into an output of the first pilot circuit 242A (e.g., early data offset for the pilot signal). Combiners 212 can include any circuitry for combining signals, including circuitry for adding, subtracting or averaging signals to produce a unified output signal. Combiners 212 can include one or more adder circuits in analog implementations or digital accumulators in digital designs, allowing for integration of multiple squared signals into a single output for the DLL 240 components.

The outputs from the first data circuit 240A and the first pilot circuit 242A can then be combined with their data late offset counterparts. For instance, the first data circuit 240A can have its output coupled or combined with an output of a second data circuit 240B. Second data circuit 240B can include an identical copy of the first data circuit 240A, except that its offset time shift can be different (e.g., shortened, lengthened, extended in the first or the second direction) with respect to the time shift of the offset in first data circuit 240A. Similarly, the second pilot circuit 242B can include an identical copy of the first pilot circuit 242A, except that its offset time shift can be different (e.g., shortened, lengthened, extended in the first or the second direction) with respect to the time shift of the offset in first pilot circuit 242A.

The outputs of the early paths of the first data circuit 240A and the first pilot circuit 242A can then be combined with late path circuitry (e.g., second data circuit 240B and the second pilot circuit 242B). The second data circuit 240B and the second pilot circuit 242B can apply a positive time offset (e.g., data late) at time offsets (tau + delta) to the outputs of the respective DLL 240 components. In such time offsets, tau can be the time of the phase estimated and delta can be an offset in time.

The data early offset signal from first data circuit 240A (e.g., output of combiner 212 of the first data circuit 240A) and the data late offset signal from the second data circuit 240B (e.g., output of combiner 212 of the second data circuit 240B) can result in a difference of these two signals. This difference can be called the error difference 260A (e.g., error difference of the first and second data circuits 240) and can be represented as: (e.g., early-offset² - late-offset²)_{data}. Similarly, the pilot early offset signal from first pilot circuit 242A (e.g., output of combiner 212 of the first pilot circuit 242A) and the pilot late offset signal from the second pilot circuit 242B (e.g., output of combiner 212 of the second pilot circuit 240B) can result in a difference of these two signals. This difference can be called the error difference 260B (e.g., error difference of the first and second pilot circuits 242) and can be represented as: and early-offset² - late-offset²)ₚᵢₒₜ. The error difference 260A signal (e.g., from the data side) and the error difference 260B signal (e.g., from the pilot side) can then be combined at a summing circuit 216 to produce a combined DLL error 270. By using the signal components from the pilot and data signal components in multiple data circuits 240 (e.g., on the data signal side) and multiple pilot circuits 242 (e.g., on the pilot signal side), the resulting DLL error 270 can have an improved SNR of about one or more decibels, such as 3dB with respect to the SNR of DLL circuits without multiple data side (e.g., data circuits 240) and pilot side (e.g., pilot circuits 242) signal processing components. The summing circuit can include any circuit combining two or more signals, such as a circuit adding or subtracting two or more analog signals. It is understood that the order of the first data circuit 240A (e.g., with data early determinations) and the second data circuit 240B (e.g., with data late determinations) can be swapped, such that the second data circuit 240B can be arranged to be the first circuit and the first data circuit 240B to be the second. In some implementations, the order of the first pilot circuit 242A (e.g., with pilot early determinations) and the second pilot circuit 242B (e.g., with pilot late determinations) can be varied or swapped, such that the second pilot circuit 242B can be arranged to be the first circuit and the first pilot circuit 242B to be the second. In some implementations, the plurality of data circuits 240 (e.g., the first and second data circuits 240A-B) can be combined into a single circuit and the plurality of pilot circuits 242 (e.g., the first and second pilot circuits 242A-B) can be combined into a single circuit.

The summing component 216 can utilize weighing to improve the DLL error. For instance, the first error difference 260A and the second error difference 260B can have weights applied so that their combination produces an improved quality of the DLL error 270. For example, the first error difference 260A and the second error difference 260B can be combined with optimal weighing to produce better quality error signal of the single delay lock loop.

FIG. 3 illustrates example 300 of a PLL or FLL circuitry 140 of a phase lock loop or frequency lock loop circuitry 140 that can utilize pilot and data components of the GNSS signal to improve the receiver performance. Example 300 illustrates a pilot signal (e.g., 118) being input into a track pilot memory 302 and a data signal (e.g., 116) input into a track data memory 304. Signals from the track pilot memory 302 and the track data memory 304 can be then input into a phase/frequency lock loop. For example, pilot signal 118 from the track pilot memory 302 can be input into a coherent combiner 306, along with a lock indicator 320. Accumulator 308 can receive the output from the coherent combiner 306 and provide an output to a discriminator 310. Discriminator 310 can receive the output from the accumulator 308 and provide its output to a loop filter 312. The filter 312 can receive the output from the discriminator 310 and provide its output to a carrier NCO 314. The carrier NCO 314 can receive the output from the loop filter 312 and provide its output to a look-up table (LUT) 316. The output from the LUT 316 can be provided to either the track pilot memory 302 and track data memory 304 or to the coherent combiner 306.

The track pilot memory 302 and the track data memory 304 can each include any memory device for storing data. The track pilot memory 302 and the track data memory 304 can include one or more memories for permanent or temporary storage within a receiver 120. Each of the track pilot memory 302 or track data memory 304 can include a range of memory locations within RAM, cache or any other storage for storing samples of the pilot 118 or data 116 signals for further processing. These samples can include reference points and features that the PLL or FLL circuitry 140 can utilize for alignment and synchronization during signal processing. By storing signals 116 and 118, the track pilot memory 302 can retain the history of the signal and maintain continuity and consistency in tracking satellite signals. The track pilot memory 302 and the track data memory 304 can be included in a circuit or can be removed from the system. For instance, memories 302 and 304 can be omitted from the designed when samples are processed in real time (e.g., without storing data into memory).

Coherent combiner 306, also referred to as the combiner 306, can include any circuitry for coherently combining signals. Combiner 306 can include the functionality (e.g., circuitry) to align and combine various samples of signals based on signal phases. For instance, the combiner 306 can align and combine data 116 with lock indicator 320 signal (e.g., a locally generated reference signal) based on their respective phases. For instance, combiner 306 can align and combine the pilot 118 and data 116 signals based on the respective energies of pilot and data sum and difference component. When phase lock is achieved, combiner can make use of in-phase signal correlation sum and difference which is less noisy than energy comparison to improve probability of correct decisions.

Accumulator 308 can include any circuitry for integrating the combined samples from the combiner 306 over a defined period. By combining the samples, the accumulator 308 can improve the signal to noise ratio, effectively amplifying the signal with respect to the noise. This accumulation technique can improve the sensitivity and tracking performance of the receiver 120, allowing for a more accurate and reliable navigation parameter 152 determination in challenging environments. By accumulating signal energy over time, the receiver 120 can extract valuable information from the signal 110 with greater precision and accuracy.

Discriminator 310 analyzes the accumulated signal against predetermined thresholds to generate an error signal. This error signal serves as feedback for the receiver's control mechanisms, facilitating adjustments to maintain alignment and synchronization with the incoming signal 110. Through error analysis, the discriminator 310 allows the receiver to continuously refine its tracking and positioning capabilities.

Loop Filter 312 can include any type and form of a filtering circuit. Loop filter 312 can include a low pass, high pass or a band pass filter that can function as a smoothing and stabilizing element in the feedback loop. Loop filter 312 can adjust, smooth, average or refine the error signal generated by the discriminator 310. For instance, by filtering out high-frequency noise and disturbances, the loop filter 312 can facilitate a consistent and reliable input for subsequent stages of signal processing.

The NCO 314 can include any circuitry for adjusting the frequency of an internal oscillator based on the filtered error signal from the loop filter 312. For instance, the NCO 314 can adjust the frequency to minimize any phase differences between the receiver's local oscillator and the incoming signal 110 signal, to improve the synchronization and tracking accuracy. For example, the NCO 314 can include an NCO for controlling the phase of the carrier signal in the receiver 120.

Complex Look-Up Table (LUT) 316 function can include any combination of hardware and software for converting the output of the NCO 314 into a value from a look up table (LUT). LUT can include a range of values corresponding to a range of magnitudes of output from the NCO 314. The LUT values can function as input to the carrier NCO 314, allowing for precise control over the carrier frequency and phase, facilitating improved receiver tracking performance and accuracy.

For example, the DLL circuitry 130 and the PLL or FLL circuitry 140 can be interconnected and impact each the performance of each other. For example, a system 100 can include a track pilot memory 302 that is configured to receive and store samples of a pilot signal 118 of a signal 110. The system 100 can include a track data memory 304 configured to receive and store samples of a data signal 116 of the signal 110. The PLL or FLL circuitry 140 can include a PLL or FLL circuit that can include a combiner 306 that is communicatively connected with an accumulator 308, which is communicatively connected with a discriminator 310, which is communicatively connected with a loop filter 312, which is communicatively connected with an NCO 314 and which is communicatively connected with LUT 316 providing feedback to the combiner 306 or to memories 302 and 304.

The combiner 306 can combine the samples of the pilot signal 118 with the samples of the data signal 116 according to a phase of the pilot signal 118 and a phase of the data signal 116. The combiner 306 can generate or produce an output of combined samples or the accumulator 308.

The combiner 306 can include different logic for FLL and PLL implementations. For example, in an FLL implementation, the method can include using energy of a sum and a difference of pilot and data components to determine a data polarity. For example, in a PLL implementation, if the loop is locked, then the method can use in-phase data and pilot correlation sum and difference to determine the data polarity. For example, for a PLL implementation, if the loop is not locked (e.g., unlocked), then the method can use the energy of sum and difference of pilot and data to determine the data polarity.

For example, due to the presence of data bits, the data component can be in-phase or 180 degrees out of phase with the pilot component. In order to combine the data and pilot components coherently, the phase of the data component is to be determined correctly. The combiner can include the logic to make this determination. The combiner logic can be expressed using following expressions which can represent the quantities that are computed or used in the coherent combiner block:
Energy of sum component: *Eₛᵤₘ* = (*pilotI*[*n*] + *dataI*[*n*])² + (*pilotQ*[*n*] + *dataQ*[*n*])²
Energy of difference component: *E_{diff} =* (*pilotI*[*n*] - *datal*[*n*])² + (*pilotQ*[*n*] - *dataQ*[*n*])²
Amplitude of in-phase sum component: *Aₛᵤₘ =* (*pilotI*[*n*] + *datal*[*n*])
Amplitude of in-phase difference component: *A_{diff} =* (*pilotI*[*n*] - *datal*[*n*])
wherein, pilotI[n] can represent the in-phase component sample for the pilot signal, pilotQ[n] can represent the quadrature-phase component sample for the pilot signal, dataI[n] can represent the in-phase component sample for the data signal and dataQ[n] can represent the quadrature-phase component sample for the data signal.

The combiner 306 can operate differently with respect to PLL and FLL operations. The combiner 306 can make adjustments to any of the data signal (e.g., 116) or the pilot signal (e.g., 118) to make these two signals have the same polarity (e.g., both positive or both negative). To achieve this functionality, the combiner 306 can include one or more squaring circuits or circuits that compute absolute value (e.g., squaring circuit 210), and one or more summing circuits to combine the signals (e.g., 212). For instance, the combiner 306 can include the circuitry to invert any of the data or pilot signals (e.g., 116 or 118) with respect to each other, to cause these two signals to be of the same polarity before combining them (e.g., adding them or subtracting them with each other).

For instance, with respect to PLL operation, if a PLL is locked, the combiner can make use of amplitudes of in-phase components of data and pilot channel to determine data channel polarity. For instance, combiner 306 can determine that a PLL is locked or that a threshold for a signal indicative of a locked PLL is detected, such as based on a value of a lock indicator 320. For example, if the combiner 306 determines or detects that amplitude of in-phase difference component is greater than amplitude of in-phase sum component, then the sign of data signal (e.g., or pilot signal) can be inverted before coherently combining with the pilot signal. For example, if amplitude of in-phase difference component is smaller than or equal to amplitude of in-phase sum component, the combiner 306 can coherently combine the two signals (e.g., combine with respect to aligned phases of the data signal and the pilot signal). In doing so, the signal resides in the in-phase component in a locked state allowing for improved detection of data bit polarity.

For example, if PLL is not locked (e.g., if threshold for PLL lock is not detector or not achieved), the combiner 306 can make use of energies of the sum and difference of the in-phase and quadrature components of data and pilot signals. If energy of difference component is greater than energy of sum component, the combiner 306 can invert sign of data signal before coherently combining the inverted data signal with the pilot signal. If energy of difference component is smaller than or equal to energy of sum component, the combiner 306 can coherently combine data signal with the pilot signal, without inverting the data signal.

With respect to the FLL operation, the combiner 306 can make use of energies of the sum and difference of the in-phase and quadrature components of data and pilot signals. If energy of difference component is greater than energy of sum component, the combiner 306 can invert sign of data signal before coherently combining the inverted data signal with the pilot signal. If energy of difference component is smaller than or equal to energy of sum component, the combiner 306 can coherently combine data signal with the pilot signal, without inverting the data signal.

The accumulator 308 can receive the combined samples from the combiner 306 and use them to accumulate a signal over a time period. The signal can be accumulated for example, for a duration of up to 5ms, 10ms, 20ms or more than ls. The samples accumulated during the time period can be used to emphasize the signal and reduce the noise over the time period of samples.

The discriminator 310 can receive the samples accumulated over the time period to generate or provide an error signal over the time period. The error signal can be generated in comparison with another signal, such as a locally generated reference signal. The error signal can be provided to a loop filter.

The loop filter 312 can receive the error signal and filter the error signal to smooth any high frequency (e.g., abrupt) changes. The filter 312 can include a low pass filter, a high pass filter or a band pass filter. The loop filter 312 can provide stability for the error signal of the discriminator 310 and provide a filtered error signal as its output for the NCO 314.

The NCO 314 can receive the filtered error signal to provide a signal with an adjusted frequency or an adjusted phase. The NCO 314 can generate a signal corresponding to the adjusted signal frequency or phase and provide the output signal to the LUT 316. In some designs, the output of the NCO 314 can provide a PLL or FLL error signal 330, which can be used as an input signal into a carrier generator 204.

The LUT 316 can include a LUT to convert the signal with the adjusted frequency or phase to control a carrier NCO of a delay lock loop circuitry 130. A single delay lock loop circuitry 130 can be configured to provide for the track pilot memory the samples of the pilot signal and for the track data memory the samples of the data signal. In some designs, the output of the LUT 316 can provide a PLL or FLL error signal 330, which can be used as an input signal into a carrier generator 206A and 206B (as well as carrier generators 206 of the second data circuit 240B and the second pilot circuit 242B).

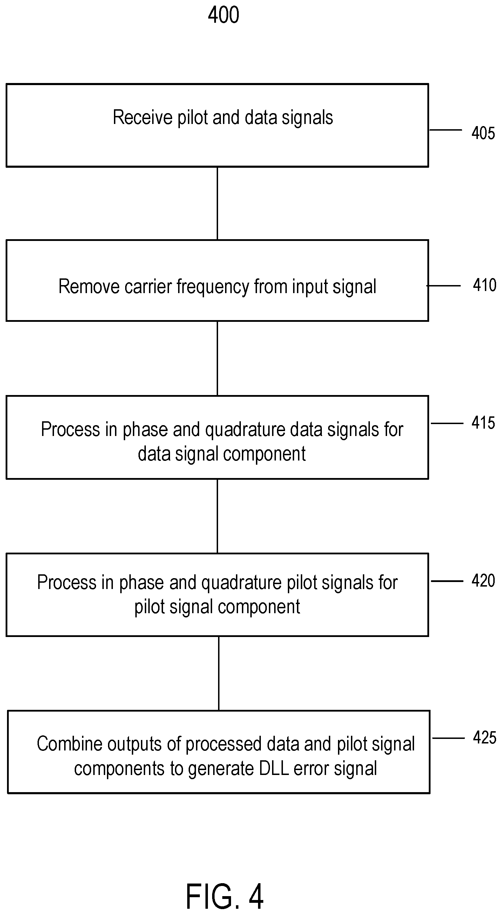

FIG. 4 illustrates an example flow diagram of a method for implementing a delay lock loop using pilot and data components of the GNSS signal to improve the receiver performance. Method 400 can include acts 405 through 425 that can be implemented, for example, using the systems, circuits and features discussed in connection with FIGS. 1-3 and FIG. 6. For example, at 405, the method can include receiving pilot and data signals. At 410, the method can include removing the carrier frequency from the input signal. At 415, the method can include processing the in-phase and quadrature data signals with data circuitry for processing early and late time offsets for data signal component. At 420, the method can include processing in-phase and quadrature pilot signals with pilot circuitry for processing the early and late time offset for pilot signal component. At 425, the method can include combining outputs of processed data and pilot signal components to generate DLL error signal.

At 405, the method can include receiving pilot and data signals. The pilot and data signals can be included as components of a Global Navigation Satellite System (GNSS) signal. The method can include receiving input signal having a code signal and pilot signal at a carrier frequency. The receiver can be configured to receive an input signal. The input signal can include a signal of a GNSS or any processed version of a GNSS input signal. For example, the input signal can include an input signal comprising a data signal and a pilot signal encoded in a carrier frequency. For example, the input signal can include a GNSS input signal from which the PRN code was removed. For example, the input signal can include the PRN code.

The input signal can include a data signal and a pilot signal. The data signal can include data of the GNSS signal corresponding to one or more navigation parameters, including for example, location, distance, timing, velocity, range or any other parameter determined by the receiver device. The pilot signal can include any signal transmitted alongside the data signal and including predetermined features or characteristics, such as amplitude, frequency and timing, which the receiver can utilize for more accurate synchronization and control.

At 410, the method can include removing the carrier frequency from the input signal. The method can include a carrier numerically controlled oscillator (NCO) removing the carrier frequency from the input signal. The carrier NCO can include an NCO circuitry coupled to the receiver and configured to remove the carrier component from the input signal. The NCO can remove the carrier frequency prior to input of the input signal into the combined data plus pilot PLL/FLL components.

At 415, the method can include processing the phase and quadrature code signals with data circuitry for processing early and late time offsets for data signal component. The DLL circuitry can include a plurality of data circuits for processing in-phase and quadrature data signal components and a plurality of pilot circuits for processing in-phase and quadrature pilot signal components of the incoming GNSS signal. A first data circuit of the data circuits can include an in-phase path comprising a first plurality of circuit components for processing an in-phase version of the code signal through the first data circuit. The first data circuit can further include a quadrature path comprising a second plurality of circuit components for processing a quadrature version of the code signal through the first data circuit. For example, the first plurality of circuit components for the in-phase version of the code signal and the second plurality of circuit components for the quadrature version of the code signal can be same or identical and include the same circuit components in the same arrangement. The in-phase and quadrature circuit paths can have a code generator for generating data time offset (e.g., early offset or late offset) can include or share one or more code generators, code integrators, squaring circuits and combiners. The code generator can be used to remove the code component from the signal, leaving only the signal energy component (e.g., after the carrier was removed by carrier generator and code was removed by code generator). For example, the first plurality of circuit components for the in-phase version of the code signal and the second plurality of circuit components for the quadrature version of the code signal can be different and include different circuit components or in different arrangement.

The method can include the first data circuit receiving the in-phase code signal and the quadrature code signal for the data signal of the code component. The code component can be removed from the in-phase and quadrature signals using one or more code generators providing a signal energy output for each of the in-phase and quadrature signal components. The first data circuit can include a first integrator (e.g., the in-phase signal integrator) providing, generating or identifying a first plurality of samples of the in-phase code signal for the data signal. The first integrator can provide or output a first in-phase combined output that combines the first plurality of samples over a sample time period. The sample time period can include a time period of between 10 and 100 milliseconds, such as 10ms or 20ms, or a time period of more than 100ms, such as several seconds.

The method can include a second integrator of the first data circuit (e.g., the quadrature signal integrator) to provide, generate or identify a second plurality of samples of the quadrature code signal. The second integrator can generate or provide a first quadrature combined output that can include or combine the second plurality of samples over the sample time period. For example, the sample time period of the second plurality of samples (e.g., of the quadrature path) can be same as the sample time period of the first plurality of samples (e.g., of the in-phase path). For example, the sample time periods of the first and second pluralities of samples can be different, depending on the design.

The method can include combining, using a combiner circuit, the first in-phase combined output (e.g., from the in-phase path of the first data circuit) and the first quadrature combined output (e.g., from the quadrature path of the first data circuit) to provide an output of the first data circuit. The output of the first data circuit (e.g., code DLL) can be used along with the output of the second data circuit (whose components can implement the same process on the signal as in the first data circuit, but with a different time offset - data late offset) to provide an error difference signal. The error difference signal can be used as an input into a summing circuit along with an error difference signal determined using outputs of a first pilot circuit (e.g., at data early offset) and a second pilot circuit (e.g., at data late offset). The output of the summing circuit that receives the error difference signals from the data circuits and the error difference signal from the pilot circuits can process (e.g., combine, add or subtract) these signals and output a DLL error signal.

For example, within each of the data circuits (e.g., first data circuit and second data circuit) the method can include squaring, by a first squaring circuit of the data circuit, the first in-phase combined output to produce a squared first in-phase combined output. The method can include squaring, by a second squaring circuit of the data circuit, the first quadrature combined output to produce a squared first quadrature combined output. The method can include combining, by a first combiner, the squared first in-phase combined output with the squared first quadrature combined output to produce the output of the first delay lock loop.

The method can include combining or subtracting the output from the combiner of the first data circuit with an output of a combiner of a second data circuit to generate an error difference signal of the data component. For instance, a first time offset signal (e.g., data early offset from the first data circuit) can be combined (e.g., added or subtracted) with a second time offset signal (e.g., data late offset from the second data circuit) to produce a first error difference. The first error difference can be combined with a second error difference generated from the combined signals of the first pilot circuit and the second pilot circuit generated at operation 420 to produce a DLL error signal. The DLL error signal can be used as a feedback (e.g., input) into code generators of the data circuits and pilot circuits.

At 420, the method can include processing in-phase and quadrature pilot signals for pilot signal components using a plurality of pilot circuits. The method can include a first pilot circuit having a same or similar circuitry (e.g., components and arrangements) as the first data circuit, receiving the in-phase code signal and the quadrature code signal for the pilot signal component of the code signal. The received in-phase signal can be an in-phase of the pilot signal component and the received quadrature signal can be a quadrature of the pilot signal component. The method can include a code generator generating a code signal, which can be used to remove the pilot component from the pilot signal to filter out or produce the signal energy of the pilot signal component. The method can include a third integrator (e.g., the integrator of the first pilot circuit) identifying, generating or providing a third plurality of samples of the in-phase code signal for the pilot signal (e.g., samples of the signal energy of the pilot in-phase signal portions). The third integrator can output, generate or provide a second in-phase combined output that combines the third plurality of samples over a sample time period.

The method can include a fourth integrator (e.g., a second integrator circuit) of the first pilot circuit identifying, generating or providing a fourth plurality of samples of the quadrature code signal for the pilot signal. The fourth integrator can generate, identify or provide a second quadrature combined output that can include or combine the fourth plurality of samples gathered over the sample time period. The sample period for the third and fourth integrators can be same as the sample periods for the first and second time periods for the first and second integrators. In some instances, the integrator time periods can vary across the integrators, based on the design. The integrators of the in-phase and quadrature processing paths of the first pilot circuit can sample signal energy output following the code generator of the first pilot circuit removing the pilot signal component.

Outputs from the integrators of the first pilot circuit can include the second in-phase combined output and the second quadrature combined output. The method can include the second in phase combined output and the second quadrature combined output being used to generate or provide an output of the second delay lock loop to be input into the summing circuit. For instance, the second in-phase combined output and the second quadrature combined outputs can each be squared by the squaring circuits. For instance, the squared versions of the in-phase combined output and the second quadrature combined outputs can be added or averaged at the combiner to provide the output of the first pilot circuit. These same operations can be performed in the second pilot circuit to provide the output of the second pilot circuit, except that the second pilot circuit output will have a different data offset (e.g., late vs. early or vice versa).

For example, within a first pilot circuit, the method can include producing, by a third squaring circuit that squares the second in-phase combined output, a squared second in-phase combined output. The method can include producing, by a fourth squaring circuit that squares the second quadrature combined output, a squared second quadrature combined output. The second combiner can combine the squared second in-phase combined output with the squared second quadrature combined output to produce the output of the second delay lock loop.

The method can include a second pilot circuit of the pilot circuitry providing its own output from its own combiner using its own squared combined signals for each of the in-phase and quadrature signal processing paths. The method can include combining (e.g., adding or subtracting) the outputs from the combiner of the first pilot circuit with the combiner of the second pilot circuit to generate or provide an error difference of the pilot signal component. The error difference of the pilot signal component can then be used as an input into a summing circuit along with the error difference for the data signal component (e.g., determined at operation 415) to generate the DLL error signal at operation 425.

At 425, the method can include combining outputs of data circuits and outputs of pilot circuits to generate DLL error signal with improved signal to noise ratio. The method can include a summing circuit configured or coupled to receive each of the error difference of the plurality of data circuits and the error difference of the plurality of pilot circuits. The method can include the summing circuit adding, averaging, combining or summing the first error difference corresponding to the data circuits and the second error difference corresponding to the pilot circuits to generate the DLL error. The DLL error provided by the summing circuit can have a signal to noise ratio (SNR) that is greater than a SNR of the input signal or the SNR of the DLL error that does not utilize the pilot circuits along with the data circuits. The DLL error can be used to more accurately calculate or determine a distance between the device and a satellite of a Global Navigation Satellite System, a location, velocity, time or any other navigation parameter.

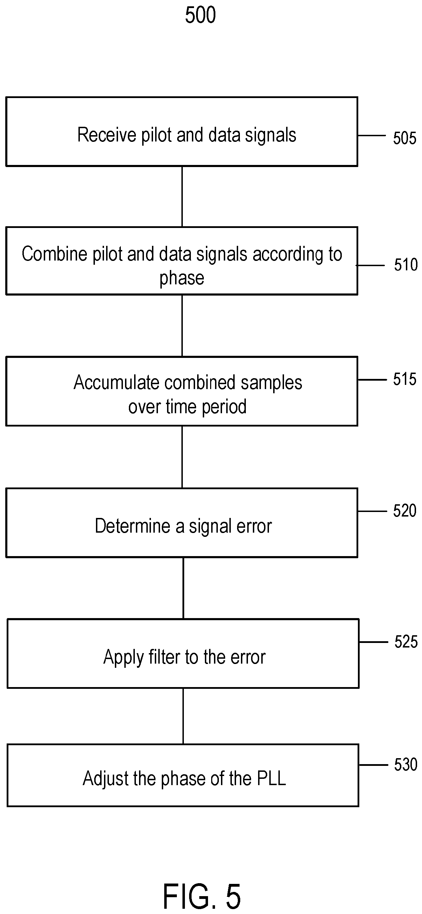

FIG. 5 illustrates an example flow diagram of a method for implementing a phase or frequency lock loop using pilot and data components of the GNSS signal to improve the receiver performance. Method 500 can include acts 505 through 530 that can be implemented, for example, using the systems, circuits and features discussed in connection with FIGS. 1-3 and FIG. 6. For example, at 505, the method can include receiving pilot and data signals. At 510, the method can combine pilot and data signals according to phase. At 515, the method can accumulate combined samples over time period. At 520, the method can determine a signal error. At 525, the method can apply filter to the error. At 530, the method can adjust the phase or frequency of the PLL or FLL.

At 505, the method can include receiving pilot and data signals. For instance, the pilot and data signals can include pilot and data components of the GNSS signal. The pilot and data signals can be received from code generator circuitries of the data circuits and pilot circuits. The pilot and data signals can be received from memories (e.g., track pilot and track data memory) storing pilot and data signals. For example, the method can include a track pilot memory receiving samples of a pilot signal of GNSS signal. The track pilot memory can store the pilot signals in memory locations. The method can include a track data memory receiving samples of the data signal and storing the samples in the memory.

At 510, the method can combine pilot and data signals according to phase. The method can include a combiner of a PLL or FLL circuitry combining samples of the pilot signal with samples of the data signal according to a phase of the pilot signal and a phase of the data signal. The combiner can gather the samples of the pilot signal and the samples of the data signal over one or more time periods and provide them to the accumulator. For instance, for FLL implementation, the method can include using energy of sum and a difference of pilot and data to determine data polarity. For example, for a PLL implementation, if the loop is locked, then the method can use in-phase data and pilot correlation sum and difference to determine the data polarity. For example, for a PLL implementation, if the loop is not locked (e.g., unlocked), then the method can use the energy of sum and difference of pilot and data to determine the data polarity.

At 515, the method can accumulate combined samples over time period. The method can include the accumulator receiving the combined samples from the combiner and providing a signal of samples accumulated over a time period. For example, the accumulator can add, average or multiply a plurality of pilot samples as well as the plurality of data samples. By adding, combining or multiplying the samples, the accumulator can reduce the signal to noise ratio and emphasize the signal components.

At 520, the method can determine a signal error. The method can include a discriminator coupled to the accumulator using the signal of samples to determine an error signal over the time period. The discriminator can determine an error signal by comparing the accumulated signal from the accumulator with a reference signal, such as a locally generated reference signal.

At 525, the method can apply filter to the error. The method can include applying a loop filter to the error signal from the discriminator. The loop filter can include a low pass, high pass or a band pass filter to filter, average or smooth the error signal. The loop filter can provide or generate an output signal from the error signal, including the filtered error signal. The filtered error signal can be used to determine a level at which a phase lock loop is locked. For example, the method can include the filtered output signal from the loop filter used for tracking at least one of a carrier frequency of a signal transmitted from a satellite of a Global Navigation Satellite System (GNSS) or a phase of the signal transmitted from the satellite of the GNSS.

At 530, the method can adjust the phase of the PLL or FLL. The method can include a numerically controlled oscillator (NCO) circuit adjusting a frequency of an oscillator of the NCO circuit to minimize a phase difference between the filtered output signal from the loop filter and a signal generated by the oscillator of the NCO circuit. The method can include a look-up circuit having a look-up table (LUT) to map an output from the NCO circuit to a LUT value. The look-up circuit can produce a LUT signal based on the LUT value. The LUT signal can be used or provided as an input to the coherent combiner. The LUT value or the LUT signal can be stored in the track pilot memory or the track data memory.

Having now described some illustrative implementations, it is apparent that the foregoing is illustrative and not limiting, having been provided by way of example. In particular, although many of the examples presented herein involve specific combinations of method acts or system elements, those acts, and those elements can be combined in other ways to accomplish the same objectives. Acts, elements and features discussed in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently disclosed systems or methods, their components, acts, or elements to single or plural configurations. References to any act or element being based on any information, act or element may include implementations where the act or element is based at least in part on any information, act, or element.

Any implementation disclosed herein may be combined with any other implementation or embodiment, and references to "an implementation," "some implementations," "one implementation" or the like are not necessarily mutually exclusive and are intended to indicate that a particular feature, structure, or characteristic described in connection with the implementation may be included in at least one implementation or embodiment. Such terms as used herein are not necessarily all referring to the same implementation. Any implementation may be combined with any other implementation, inclusively or exclusively, in any manner consistent with the aspects and implementations disclosed herein.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B" can include only 'A', only 'B', as well as both 'A' and 'B'. Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

When an element is referred to herein as being "connected" or "coupled" to another element, it is to be understood that the elements can be directly connected or coupled the other element, or have intervening elements present between the connected or coupled elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

When an element is referred to herein as being "disposed" beneath or above a particular element, it is to be understood that the elements can be directly located or positioned above or below the other element, or have intervening elements present between the two elements. In contrast, when an element is referred to as being "directly disposed" on or below another element, it should be understood that no intervening elements are present in the "direct" disposition between the elements. However, the existence of a direct disposition does not exclude other disposition, in which intervening elements may be present.

While operations are depicted in the drawings in a particular order, such operations are not required to be performed in the particular order shown or in sequential order, and all illustrated operations are not required to be performed. Actions described herein can be performed in a different order. The separation of various system components does not require separation in all implementations, and the described program components can be included in a single hardware or software product.

## Claims

1. A device (104) comprising:
a receiver (120) configured to receive an input signal comprising a carrier component and a code component, the code component comprising a data component and a pilot component;
a carrier numerically controlled oscillator, NCO, (314) coupled to the receiver (120) and configured to remove the carrier component from the input signal, the carrier NCO (314) configured to output an in phase signal and a quadrature signal for each of the data component and the pilot component;
one or more data circuits (240) configured to receive the in-phase signal and the quadrature signal for the data component;
one or more pilot circuits (242) configured to receive the in phase signal and the quadrature code signal for the pilot component;
a summing circuit (216) coupled to each of the one or more data circuits (240) and the one or more pilot circuits (242), the summing circuit (216) to sum a first error difference signal corresponding to the one or more data circuits (240) and a second error difference corresponding to the one or more pilot circuits (242) to provide a delay lock loop, DLL, error signal.

2. The device (104) of claim 1, comprising at least one of the following features:
i) wherein the input signal corresponds to a signal of a Global Navigation Satellite System (GNSS);
ii) wherein the DLL error signal is used to determine a distance between the device (104) and a satellite of a Global Navigation Satellite System.

3. The device (104) of claim 1 or 2, wherein the one or more data circuits (240) includes a first integrator (208A) of a first data circuit (240A) of the one or more data circuits (240), the first integrator (208A) to identify a first plurality of samples of the in phase signal of the data component and provide a first in phase combined output that combines the first plurality of samples over a sample time period, the first in-phase combined output offset according to a first time offset.

4. The device (104) of claim 3, wherein the first data circuit (240A) includes a second integrator (208B) to identify a second plurality of samples of the quadrature data signal of the data component and provide a first quadrature combined output that combines the second plurality of samples over the sample time period.

5. The device (104) of claim 4, wherein the first data circuit (240A) comprises:
a first squaring circuit (210A) that squares the first in phase combined output to produce a squared first in-phase combined output; and
a second squaring circuit (210B) that squares the first quadrature combined output to produce a squared first quadrature combined output.

6. The device (104) of claim 5, wherein the first data circuit (240A) comprises:
a first combiner (212A) to combine the squared first in phase combined output of the first data circuit (240A) with the squared first quadrature combined output of the first data circuit (240A) to produce a first output of the first data circuit (240A).

7. The device (104) of claim 6, comprising:
a second data circuit (240B) of the one or more data circuits (240), the second data circuit (240B) comprising a second combiner of the second data circuit (240B) to combine a squared in-phase combined output of the second data circuit (240B) with a squared quadrature combined output of the second data circuit (240B) to produce a second output of the second data circuit (240B), the second output of the second data circuit (240B) offset according to a second time offset different than the first time offset; and
wherein the first output of the first data circuit (240A) and the second output of the second data circuit (240B) are combined to produce the first error difference signal.

8. The device (104) of any of claims 1 to 7, wherein the one or more pilot circuits (242) includes a first integrator (208A) of a first pilot circuit (242A) of the one or more pilot circuits (242), the first integrator (208A) to identify a first plurality of samples of the in phase signal of the pilot component and provide a second in-phase combined output that combines the third plurality of samples over a sample time period, the first in-phase combined output offset according to a first time offset;
in particular wherein the first pilot circuit (242A) includes a second integrator (208B) to identify a second plurality of samples of the quadrature pilot signal of the pilot component and provide a second quadrature combined output that combines the second plurality of samples over the sample time period;
in particular wherein the first pilot circuit (242A) comprises:
a first squaring circuit (210A) of the first pilot circuit (242A) that squares the second in-phase combined output to produce a squared second in-phase combined output; and
a second squaring circuit (210B) of the first pilot circuit (242A) that squares the second quadrature combined output to produce a squared second quadrature combined output in particular wherein the first pilot circuit (242A) comprises:
a second combiner to combine the squared second in-phase combined output of the first pilot circuit (242A) with the squared second quadrature combined output of the first pilot circuit (242) to produce an output of the first pilot circuit (242A);
in particular comprising:
a second pilot circuit (242B) of the one or more pilot circuits (242), the second pilot circuit (242B) comprising a second combiner of the second pilot circuit (242B) to combine a squared in-phase combined output of the second pilot circuit (242B) with a squared quadrature combined output of the second pilot circuit (242B) to produce a second output of the second pilot circuit (242B), the second output of the second pilot circuit (242B) offset according to a second time offset different than the first time offset; and
wherein the first output of the first pilot circuit (242A) and the second output of the second pilot circuit (242B) are combined to produce the second error difference signal.

9. A circuitry, comprising:
a lock loop circuit (140) for at least one of a phase or a frequency of a global navigation satellite system, GNSS, signal, the lock loop circuit (140) comprising:
a combiner (306) configured to combine samples of a pilot signal of the GNSS signal with samples of a data signal of the GNSS signal according to a phase of the pilot signal and a phase of the data signal and to invert at least one of the data signal or the pilot signal responsive to determining that the data signal and the pilot signal do not have a same polarity;
an accumulator (308) configured to receive combined samples from the combiner (306) and provide a signal of samples accumulated over a time period;
a discriminator (310) coupled to the accumulator (308) and configured to use the signal of samples to determine an error signal over the time period;
a loop filter (312) configured to apply a filter to the error signal to provide a filtered output signal used to determine of a level at which a phase lock loop is locked.

10. The circuitry of claim 9, wherein the filtered output signal is used to provide one or more signals to track at least one of a carrier frequency of a signal transmitted from a satellite of a Global Navigation Satellite System, GNSS, or a phase of the signal transmitted from the satellite of the GNSS.

11. The circuitry of claim 9 or 10, comprising numerically controlled oscillator, NCO, circuit (314) configured to adjust a frequency of an oscillator of the NCO circuit (314) to minimize a phase difference between the filtered output signal and a signal generated by the oscillator of the NCO circuit (314).

12. The circuitry of claim 11, comprising a look-up circuit (316) having a look-up table, LUT, to map an output from the NCO circuit (314) to a LUT value, the look-up circuit (316) configured to produce a LUT signal based on the LUT value, wherein the circuitry is configured to use the LUT signal as an input to the combiner (306).

13. The circuitry of any of claims 9 to 12, wherein the combiner (306) is configured to combine the samples of the pilot signal with the samples of the data signal using the inverted at least one of the data signal or the pilot signal.

14. The circuitry of claim 12 or 13, wherein the circuitry is configured to store at least one of the LUT value or the LUT signal into at least one of a track pilot memory storing the samples of the pilot signal or a track data memory storing the samples of the data signal.

15. A system, comprising:
a lock loop circuit (140) for at least one of a phase or a frequency of the GNSS signal, the lock loop circuit (140) comprising:
a combiner (306) to combine samples of pilot signal of a global navigation satellite system, GNSS, signal with samples of the data signal of the GNSS signal according to a phase of the pilot signal and a phase of the data signal to produce combined samples and to invert at least one of the data signal or the pilot signal responsive to determining that the data signal and the pilot signal do not have a same polarity;
an accumulator (308) to receive the combined samples from the combiner (306) and accumulate a signal of time period of samples;
a discriminator (310) to use the signal of time period of samples to provide an error signal over a time period;
a loop filter (312) to filter the error signal to use the error signal to provide a filtered error signal;
a numerically controlled oscillator, NCO, (314) to use the filtered error signal to provide a signal with an adjusted frequency; and
a look up table to generate the signal with the adjusted frequency to control a code generator rate of a delay lock loop, the delay lock loop including a first delay lock loop for the data signal and a second delay lock loop for the pilot signal, wherein the first delay lock loop and the second delay lock loop are configured to provide for the track pilot memory the samples of the pilot signal and for the track data memory the samples of the data signal.
